# EUROPÄISCHE PATENTSCHRIFT

(11) **EP 3 433 120 B1**
(45) Veröffentlichungstag und Bekanntmachung des Hinweises auf die Patenterteilung: **15.04.2020**
(21) Anmeldenummer: 17707883.9
(22) Anmeldetag: 01.03.2017
(51) Int. Cl.: B60K 15/03

(54) **BETRIEBSFLÜSSIGKEITSBEHÄLTER MIT VERSTEIFUNGSELEMENT UND VERFAHREN ZUM HERSTELLEN EINES BETRIEBSFLÜSSIGKEITSBEHÄLTERS**
OPERATING LIQUID CONTAINER WITH STIFFENING ELEMENT AND METHOD FOR MANUFACTURING AN OPERATING LIQUID CONTAINER
CONTENEUR DE LIQUIDE D'OPÉRATION AVEC UN ÉLÉMENT DE RENFORCEMENT ET PROCÉDÉ DE FABRICATION D'UN CONTENEUR DE LIQUIDE D'OPÉRATION

(30) Priorität: 21.03.2016 DE 102016204648
(43) Veröffentlichungstag der Anmeldung: 30.01.2019
(73) Patentinhaber: Kautex Textron GmbH & Co. KG, 53229 Bonn (DE)
(72) Erfinder: SCHMITZ, Dieter, 53227 Bonn (DE)
(74) Vertreter: Richly & Ritschel Patentanwälte PartG mbB
(86) Internationale Anmeldenummer: PCT/EP2017/054710
(87) Internationale Veröffentlichungsnummer: WO 2017/162412

(56) Entgegenhaltungen:
- DE-A1-102007 024 677
- DE-A1-102008 009 829
- DE-A1-102011 015 049
- DE-A1-102012 008 394

## Beschreibung

Die Erfindung betrifft einen Betriebsflüssigkeitsbehälter aus thermoplastischem Kunststoff für ein Kraftfahrzeug.

Ferner betrifft die vorliegende Erfindung ein Verfahren zur Herstellung eines Betriebsflüssigkeitsbehälters aus thermoplastischem Kunststoff für ein Kraftfahrzeug.

Betriebsflüssigkeitsbehälter aus thermoplastischem Kunststoff im Sinne der Erfindung sind insbesondere aber nicht ausschließlich Kraftstoffbehälter für Kraftfahrzeuge, Wischwasserbehälter, Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet.

Bei Kraftfahrzeugen mit einer Brennkraftmaschine wird bei einer Wärmebeaufschlagung eines Betriebsflüssigkeitsbehälters, insbesondere des Kraftstoffbehälters, die Betriebsflüssigkeit, z.B. der Kraftstoff ebenfalls erwärmt, so dass der Dampfdruck der Betriebsflüssigkeit steigt und der Betriebsflüssigkeitsbehälter mit einem entsprechenden Innendruck beaufschlagt wird, wodurch der Kraftstoffbehälter einer Deformation unterliegt.

Zum Entlüften eines Betriebsflüssigkeitsbehälters in Form eines Kraftstoffbehälters ist dieser mit einem Aktivkohlefilter zum Ausfiltern von Treibstoffdämpfen fluidverbunden. Das Aktivkohlefilter wird im Betrieb der Brennkraftmaschine mittels Ansaugluft gespült, so dass in der Aktivkohle gebundene Treibstoffdämpfe der Brennkraftmaschine zugeführt werden können.

Aufgrund des Spülvorgangs mit Ansaugluft kann die Aufnahmekapazität des Aktivkohlefilters begrenzt werden.

Bei Hybrid-Kraftfahrzeugen besteht ferner ein durch die verminderte Betriebszeit der Brennkraftmaschine bedingtes weiteres Problem. Aufgrund der verminderten Betriebszeit der Brennkraftmaschine wird ein mit dem Kraftstoffbehälter fluidverbundenes Aktivkohlefilter entsprechend weniger gespült, so dass auch weniger in der Aktivkohle gebundener Treibstoffdampf herausgespült werden kann. Dies wiederum hat zur Folge, dass Aktivkohlefilter bei Hybrid-Kraftfahrzeugen größer dimensioniert werden müssen. Ferner wird durch Entlüften des Kraftstoffbehälters über das Aktivkohlefilter weiterer Kraftstoff in die Dampfphase überführt, so dass es vorteilhaft wäre, den Kraftstoffbehälter steifer und/oder druckfester auszuführen.

Aus dem Stand der Technik ist es bekannt, den Kraftstoffbehälter durch Umwicklungen und/oder Versteifungselemente innerhalb des Kraftstoffbehälters zu versteifen. Umwickelte Kraftstoffbehälter sind jedoch in Ihrer Herstellung aufwendig und somit kostenintensiv. Außerdem schränkt eine wirkungsvoll umwickelbare Geometrie den Gestaltungsfreiraum beim Design und damit das nutzbare Volumen ein.

Zum Einbringen eines Versteifungselements in den Betriebsflüssigkeitsbehälter ist es aus dem Stand der Technik bekannt, das sogenannte "Twin Sheet Blowmolding"-Verfahren zum Herstellen des Betriebsflüssigkeitsbehälters zu verwenden, bei dem entweder zwei bahnförmige Vorformlinge aus einem Extrusionskopf mit zwei Extrusionsdüsen extrudiert werden, oder ein schlauchförmiger Vorformling in zwei bahnförmige Lappen aufgetrennt wird. Die bahnförmigen Vorformlinge werden jeweils in einer Blasformhälfte eines mehrteiligen Blasformwerkzeugs mittels Differenzdruck ausgeformt. Anschließend wird mittels eines Zwischenrahmens des Blasformwerkzeuges, der zwischen den zwei Blasformhälften positioniert wird, ein Versteifungselement zwischen die ausgeformten und sich noch in den Kavitäten der Blasformhälften befindlichen Behälterschalen des Betriebsflüssigkeitsbehälters positioniert und mit zumindest einer Innenseite einer Behälterschale verbunden. Schlussendlich wird der Zwischenrahmen zwischen den Blasformhälften entfernt, und durch Zusammenführen der Behälterschalen wird das Versteifungselement mit einer weiteren Innenseite einer Behälterschale verbunden, so dass das Versteifungselement druckbedingten Deformationen entgegenwirken kann.

Kraftstoffbehälter, insbesondere für Ottokraftstoffe, werden üblicherweise aus mehrlagigen co-extrudierten Kunststoffen gefertigt. In der Wandung des Kraftstoffbehälters ist zumindest eine Barriereschicht für Kohlenwasserstoffe eingebettet. Daher bietet der mittels des "Twin Sheet Blowmolding"-Verfahrens hergestellte Betriebsflüssigkeitsbehälter den Vorteil, das beim Einbringen des Versteifungselements die Barriereschicht nicht beschädigt wird, so dass kein Leck für Kohlenwasserstoffe gebildet ist. Jedoch ist das "Twin Sheet Blow-molding"-Verfahren verglichen mit dem Blasformen eines schlauchförmigen Vorformlings zeit- und kostenaufwendig.

Ein Betriebsflüssigkeitsbehälter aus thermoplastischem Kunststoff für ein Kraftfahrzeug ist aus der DE 10 2008 009 829 A1 bekannt.

Die der vorliegenden Erfindung zugrundeliegende Aufgabe ist die Bereitstellung eines verbesserten Betriebsflüssigkeitsbehälters, der eine erhöhte Druckstabilität aufweist, und dessen Herstellung schneller und kostengünstiger ist.

Diese Aufgabe wird durch einen Betriebsflüssigkeitsbehälter mit den in Anspruch 1 angegebenen Merkmalen gelöst. Vorteilhafte Ausgestaltungen sind in dessen Unteransprüchen beschrieben.

Ferner liegt der vorliegenden Erfindung die Aufgabe zugrunde, ein Verfahren zum Herstellen eines Betriebsflüssigkeitsbehälters aus thermoplastischem Kunststoff bereitzustellen, mittels dem schnell und kostengünstig ein Betriebsflüssigkeitsbehälter mit erhöhter Druckstabilität herstellbar ist.

Diese Aufgabe wird durch ein Verfahren mit den in Anspruch 9 angegebenen Merkmalen gelöst. Vorteilhafte Ausgestaltungen des Verfahrens sind in den von Anspruch 9 abhängigen Ansprüchen beschrieben.

Ein erfindungsgemäßer Betriebsflüssigkeitsbehälter aus thermoplastischen Kunststoff weist zwei Öffnungen auf, die in einander gegenüberliegenden Behälterwänden des Betriebsflüssigkeitsbehälters angeordnet sind. Ferner weist der Betriebsflüssigkeitsbehälter zumindest ein beide Öffnungen durchragendes Versteifungselement auf. Dabei hintergreifen zwei Versteifungselementenden die Behälterwände von außen, so dass das Versteifungselement einer durch Innendruck des Betriebsflüssigkeitsbehälters bedingten Deformation entgegenwirkt. Der erfindungsgemäße Betriebsflüssigkeitsbehälter zeichnet sich dadurch aus, dass zwischen zumindest einem Versteifungselementende und einer Behälterwand ein Stabilisierungselement angeordnet ist, wobei das Stabilisierungselement jeweils eine Durchgangsöffnung aufweist, durch die das Versteifungselement hindurchragt. Ferner weist das Stabilisierungselement einen ersten und einen zweiten thermoplastischen Kunststoff auf und ist mit einer Behälterwand verschweißt.

Selbstverständlich kann der erfindungsgemäße Betriebsflüssigkeitsbehälter eine der Anzahl der Versteifungselementenden entsprechende Anzahl von Stabilisierungselementen aufweisen, die jeweils eine Durchgangsöffnung aufweisen, durch das das/ein Versteifungselement hindurchragt.

Der erfindungsgemäße Betriebsflüssigkeitsbehälter weist eine hohe Druckstabilität auf, denn das Versteifungselement, das beispielsweise als Versteifungsstrebe oder Versteifungsrohr ausgebildet sein kann, wirkt einer durch Innendruck bedingten Deformation entgegen. Die zwischen den Behälterwandungen und den Versteifungselementenden angeordneten Stabilisierungselemente verhindern, dass bei einer Druckbeaufschlagung des erfindungsgemäßen Betriebsflüssigkeitsbehälters die Behälterwände kriechen. Grundsätzlich ist es bekannt, dass der thermoplastische Kunststoff HDPE, der üblicherweise zumindest die Außenschicht eines Betriebsflüssigkeitsbehälters bildet, bei einer andauernden Druckbelastung wieder plastisch wird und zum Kriechen neigt. Mittels des Stabilisierungselements wird die effektive Auflagefläche des Versteifungselements auf die Behälterwand erhöht, so dass dadurch ein Kriechen der Behälterwand wirksam entgegengewirkt wird. Weiterhin wird ein Kriechen der Behälterwände dadurch entgegengewirkt, das das Stabilisierungselement als 2K-Bauteil, also als ein zwei thermoplastische Kunststoffe aufweisendes Bauteil ausgebildet ist. Ein erster thermoplastischer Kunststoff des Stabilisierungselements bewirkt, dass das Stabilisierungselement mit einer Behälterwand verschweißt werden kann. Ein anderer thermoplastischer Kunststoff des Stabilisierungselements weist eine erhöhte Steifigkeit auf (z.B. Polyamid), so dass einem Kriechen wirksam entgegengewirkt wird. Ferner wirkt beispielsweise Polyamid einer Diffusion von Kohlenwasserstoffen wirksam entgegen, so dass der erfindungsgemäße Betriebsflüssigkeitsbehälter eine verminderte Durchlässigkeit für Kohlenwasserstoffe aufweist. Ferner kann der erfindungsgemäße Betriebsflüssigkeitsbehälter durch Extrudieren und Ausformen eines schlauchförmigen Vorformlings erzeugt werden, so dass sowohl die Herstellungskosten als auch die Herstellungszeit des erfindungsgemäßen Betriebsflüssigkeitsbehälters reduziert sind.

Der Betriebsflüssigkeitsbehälter ist insbesondere als Kraftstoffbehälter ausgebildet. Die Öffnungen in den Behälterwänden sind vorzugsweise einander gegenüberliegend angeordnet. Die Versteifungselementenden können auch als Versteifungselementverbindungsabschnitte bezeichnet werden. Die Versteifungselementenden hintergreifen die Öffnungen von außen, so dass das Versteifungselement auch als Zuganker bezeichnet werden.

Das Stabilisierungselement kann auch als Einlegeteil, Einlegebauteil, Zwischenelement, Zwischenbauteil oder als Adapter bezeichnet werden. Das Stabilisierungselement ist als 2K-Bauteil ausgebildet, also als ein aus zwei Kunststoffen, insbesondere zwei thermoplastische Kunststoffen gebildetes Bauteil.

Jedes Stabilisierungselement ist also sandwichartig zwischen einem Versteifungselementende und einer Behälterwand angeordnet. Da jedes Stabilisierungselement jeweils mit einer Behälterwand verschweißt ist, ist der erste thermoplastische Kunststoff der Stabilisierungselemente mit den Behälterwänden verschweißt. Folglich ist der erste thermoplastische Kunststoff hinsichtlich der Verschweißbarkeit kompatibel mit dem thermoplastischen Kunststoff des Betriebsflüssigkeitsbehälters.

Die Versteifungsstrebe ist vorzugsweise rohrförmig ausgestaltet.

Vorzugsweise weisen die Versteifungselementenden einen ersten und einen zweiten thermoplastischen Kunststoff auf und sind mit jeweils einem Stabilisierungselement verschweißt.

Der entsprechend ausgebildete Betriebsflüssigkeitsbehälter weist eine nochmals erhöhte Stabilität auf, denn das Versteifungselement kann zusätzlich zu Überdruck bedingten Zugkräften auch beispielsweise Unterdruck bedingten Druckkräften zwischen den Behälterwandungen entgegenwirken. Ferner weist der entsprechend ausgebildete Betriebsflüssigkeitsbehälter auch eine erhöhte Torsionssteifigkeit auf. Des Weiteren ist der so ausgebildete Betriebsflüssigkeitsbehälter mittels wenigen Verfahrensschritten herstellbar, so dass die Produktionskosten für den entsprechend ausgebildeten Betriebsflüssigkeitsbehälter reduziert sind.

Vorzugsweise handelt es sich bei den ersten und zweiten thermoplastischen Kunststoffen um die gleichen ersten und zweiten thermoplastischen Kunststoffe, die auch das Stabilisierungselement umfasst. Selbstverständlich kann es sich bei den thermoplastischen Kunststoffen des Versteifungselements auch um andere thermoplastische Kunststoffe als bei dem Stabilisierungselement handeln. Lediglich eine Kompatibilität der Kunststoffe hinsichtlich der Verschweißbarkeit muss gewährleistet sein.

Folglich ist der erste thermoplastische Kunststoff der Versteifungselementenden mit den Stabilisierungselementen verschweißt.

Vorzugsweise weist das gesamte Versteifungselement den ersten und den zweiten thermoplastischen Kunststoff auf.

Weiter vorzugsweise weist das Stabilisierungselement einen umlaufenden Kragen auf, der in Richtung auf eine Behälteraußenseite abgewinkelt ist, so dass das Stabilisierungselement auf der Behälteraußenseite eine Mulde bildet.

Durch eine entsprechende Ausbildung des Stabilisierungselements wird eine Kontaktfläche zwischen dem Stabilisierungselement und der Behälterwand vergrößert, so dass die Stabilität des Betriebsflüssigkeitsbehälters vergrößert ist. Auch bietet eine entsprechende Ausbildung des Betriebsflüssigkeitsbehälters den Vorteil, dass das Stabilisierungselement bündig mit der Behälterwand abschließen kann.

Die Mulde ist vorzugsweise trichterförmig.

Vorzugsweise weisen alle Stabilisierungselemente einen entsprechend ausgebildeten Kragen auf.

Vorzugsweise weist das Stabilisierungselement eine dessen Durchgangsöffnung umschließende Wandung auf, die einen zur Behälteraußenseite geöffneten Aufnahmeraum bildet, in den das Versteifungselementende aufgenommen ist.

Die Wandung umschließt in Draufsicht auf das Stabilisierungselement dessen Durchgangsöffnung.

Vorzugsweise ist die Wandung zylinderförmig ausgebildet. Die zylinderförmige Wandung umschließt folglich auch das Versteifungselementende.

Vorzugsweise weist jedes Stabilisierungselement eine entsprechende zylinderförmige Wandung auf.

Vorzugsweise weist der Betriebsflüssigkeitsbehälter zumindest eine Abdeckung auf, die den Aufnahmeraum des Stabilisierungselements verschließt und zur Behälteraußenseite hin abdichtet. Bei einem entsprechend ausgebildeten Betriebsflüssigkeitsbehälter ist der Emissionspfad für beispielsweise Kohlenwasserstoffe aus dem Betriebsflüssigkeitsbehälter blockiert.

Die Abdeckungen kann beispielsweise aus PA (Polyamid) und/oder aus POM (Polyoxymethylen) gebildet sein. Die Abdeckungen sind vorzugsweise jeweils mit den zylinderförmigen Wandungen der Stabilisierungseinrichtungen verschweißt. Da die Stabilisierungseinrichtungen als 2K-Bauteile ausgebildet sind, erfolgt die Verschweißung zwischen der Abdeckung und der Stabilisierungseinrichtung durch eine PA/PA oder POM/POM Verschweißung.

Vorzugsweise ist der Betriebsflüssigkeitsbehälter derart ausgebildet, dass das Versteifungselement zweistückig mit einem ersten Versteifungselementteil und einem zweiten Versteifungselementteil ausgebildet ist. Dabei ragt das erste Versteigungselementteil durch eine erste Öffnung einer ersten Behälterwand und das zweite Versteifungselementteil ragt durch eine zweite Öffnung in einer zweiten Behälterwand. Das Versteifungselementende des ersten Versteifungselementteils hintergreift die erste Behälterwand und das Versteifungselementende des zweiten Versteifungselementteils hintergreift die zweite Behälterwand jeweils von außen. Sowohl das erste Versteifungselementteil als auch das zweite Versteifungselementteil weisen jeweils ihren Versteifungselementenden gegenüberliegend eine Verbindungseinrichtung auf, mittels denen die beiden Versteifungselementteile miteinander verbunden sind.

Ein entsprechend ausgebildeter Betriebsflüssigkeitsbehälter ist hinsichtlich sein Herstellungszeit optimiert. Denn die Versteifungselementteile werden von zwei einander gegenüberliegenden Seiten in den Betriebsflüssigkeitsbehälter eingebracht und innerhalb des Betriebsflüssigkeitsbehälters miteinander verbunden.

In dem Versteifungselementende des ersten Versteifungselementteils ist eine erste Verbindungseinrichtung und in dem Versteifungselementende des zweiten Versteifungselementteils ist eine zweite Verbindungseinrichtung angeordnet.

Die erste Verbindungseinrichtung kann zumindest eine Rastaufnahme und die zweite Verbindungseinrichtung kann zumindest eine Rastzunge umfassen.

Die erste Verbindungseinrichtung kann zumindest ein Rasthaken und die zweite Verbindungseinrichtung kann zumindest ein Rastzacken umfassen.

Vorzugsweise ist der Betriebsflüssigkeitsbehälter derart ausgebildet, dass die jeweiligen Versteifungselementteile an den den Versteifungselementenden gegenüberliegenden Enden eine Schneideinrichtung zum Durchtrennen der Behälterwandung aufweisen.

Ein entsprechend ausgebildeter Betriebsflüssigkeitsbehälter kann in einer nochmals verkürzten Zykluszeit hergestellt werden, denn die Öffnungen in den Behälterwänden des Betriebsflüssigkeitsbehälters müssen nicht in einem gesonderten Schritt ausgekreist/gebildet werden, sondern können durch Einführen der Versteifungselementteile in den Betriebsflüssigkeitsbehälter gebildet werden.

Vorzugsweise ist der Betriebsflüssigkeitsbehälter derart ausgebildet, dass der Betriebsflüssigkeitsbehälter durch Blasformen eines schlauchförmigen Vorformlings erzeugt wird.

Die der vorliegenden Erfindung zugrundeliegende Aufgabe wird auch durch ein Verfahren zum Herstellen eines Betriebsflüssigkeitsbehälters aus thermoplastischem Kunststoff mit zumindest einem zwischen einander gegenüberliegenden Behälterwänden angeordnetem Versteifungselement gelöst, das einer durch Innendruck des Betriebsflüssigkeitsbehälters bedingten Deformation entgegenwirkt, wobei das Verfahren folgende Verfahrensschritte aufweist:
- Bereitstellen von zumindest einem eine Durchgangsöffnung aufweisenden Stabilisierungselement;
- Einbringen eines schlauchförmigen Vorformlings aus thermoplastischem Kunststoff in ein Blasformwerkzeug mit einem Formnest, welches die Kontur des Betriebsflüssigkeitsbehälters definiert;
- Ausformen des Vorformlings innerhalb des Formnestes, wobei der Vorformling das Stabilisierungselement formnestseitig umschließt und mit dem Stabilisierungselement verschweißt wird;
- Herstellen von zwei Öffnungen in einander gegenüberliegenden Behälterwänden des Betriebsflüssigkeitsbehälters;
- Einführen eines ersten Versteifungselementteils durch eine erste Öffnung und eines zweiten Versteifungselementteils durch eine zweite Öffnung, so dass zumindest ein Versteifungselementende der Versteifungselementteile in direktem Kontakt mit dem zumindest einen Stabilisierungselement steht, wobei die Versteifungselementenden die Behälterwände jeweils hintergreifen; und
- Verbinden des ersten Versteifungselementteils mit dem zweiten Versteifungselementteil mittels an den Versteifungselementteilen bereitgestellten Verbindungseinrichtungen.

Vorzugsweise ist das Verfahren derart ausgebildet, dass die Öffnungen in den einander gegenüberliegenden Behälterwänden mittels jeweils einer den Versteifungselementenden gegenüberliegenden Schneideeinrichtung der Versteifungselementteile in die Behälterwände eingebracht werden, indem das erste Versteigungselementteil durch eine erste Behälterwand und das zweite Versteifungselementteil durch eine zweite Behälterwand hindurchgeschoben wird.

Das entsprechend ausgebildete Verfahren bietet den Vorteil, dass weniger Verfahrensschritte zum Herstellen des Betriebsflüssigkeitsbehälters notwendig sind, da die Verfahrensschritte des Erzeugens von Öffnungen in den Behälterwänden des Betriebsflüssigkeitsbehälters zusammen mit dem Einbringen/Hindurchschieben eines ersten Versteifungselementteils durch eine erste Behälterwand und eines zweiten Versteifungselementteils durch eine zweite Behälterwand realisiert sind.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Schnittansicht eines erfindungsgemäßen Betriebsflüssigkeitsbehälters; und
- Figuren 2 bis 4:: verschiedene Varianten der Verbindung der Versteifungselementteile miteinander.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

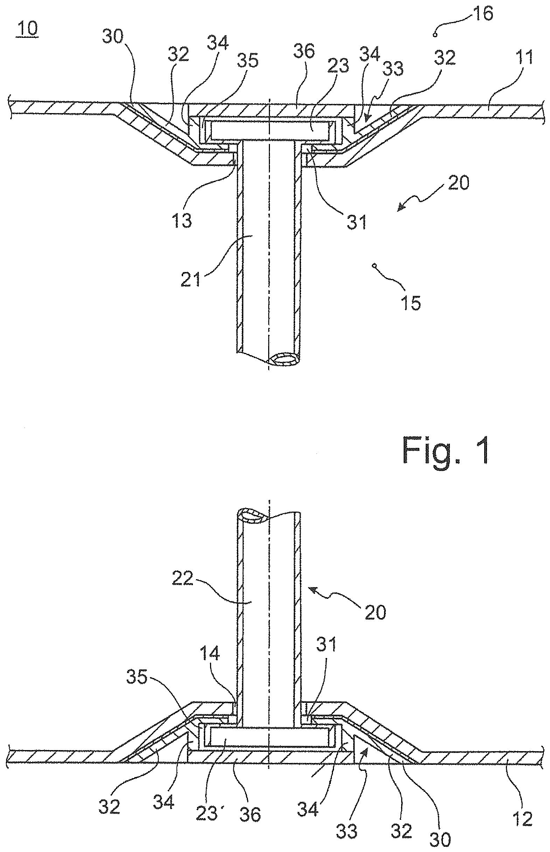

Figur 1 zeigt eine schematische Schnittansicht eines erfindungsgemäßen Betriebsflüssigkeitsbehälters 10. Der Betriebsflüssigkeitsbehälter 10 ist üblicherweise aus einem thermoplastischen Kunststoff hergestellt. In dem dargestellten Ausführungsbeispiel ist der Betriebsflüssigkeitsbehälter 10 als Kraftstoffbehälter 10 ausgebildet, jedoch kann der Betriebsflüssigkeitsbehälter 10 auch zur Aufnahme einer Harnstofflösung oder Wischwasser oder Öl oder dergleichen ausgebildet sein.

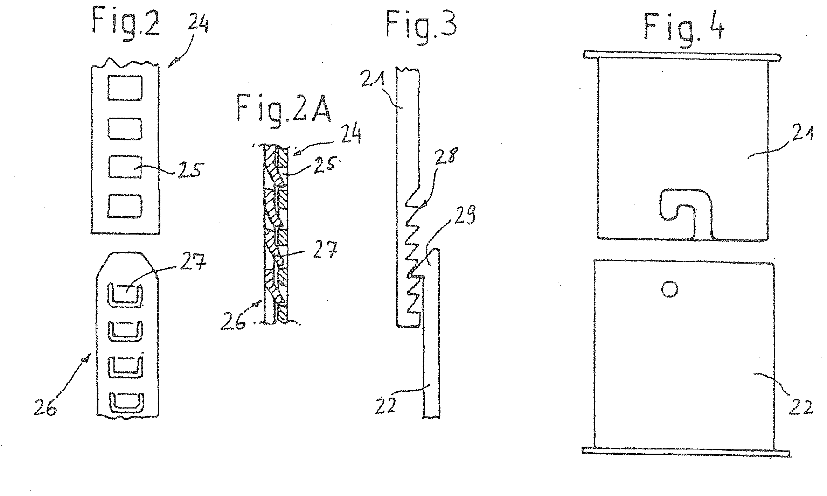

Aus Figur 1 ist ersichtlich, dass in einer ersten Behälterwand 11 des Betriebsflüssigkeitsbehälters 10 eine erste Öffnung 13 angeordnet ist. In einer zweiten Behälterwand 12 des Betriebsflüssigkeitsbehälters 10 ist eine zweite Öffnung 14 vorgesehen, die der ersten Öffnung 13 gegenüberliegend angeordnet ist. Der Betriebsflüssigkeitsbehälter 10 umfasst ferner ein die beiden Öffnungen 13, 14 durchragendes Versteifungselement 20, das als Zuganker 20 ausgebildet ist. Das Versteifungselement 20 ist zweistückig ausgebildet und umfasst ein erstes Versteifungselementteil 21 und ein zweites Versteifungselementteil 22. Die beiden Versteifungselementteile 21, 22 sind miteinander verbunden. Hinsichtlich der Art der Verbindung der Versteifungselementteile 21, 22 wird auf die Ausführungen zu den Figuren 2 bis 4 weiter unten Bezug genommen.

Das erste Versteifungselementteil 21 ragt durch die erste Öffnung 13, die in der ersten Behälterwand 11 angeordnet ist, und das zweite Versteifungselementteil 22 ragt durch die zweite Öffnung 14, die in der zweiten Behälterwand 12 angeordnet ist. Ein Versteifungselementende 23 des ersten Versteifungselementteils 21 hintergreift die Behälterwand 11 von außen, und ein Versteifungselementende 23' des zweiten Versteifungselementteils 22 hintergreift die zweite Behälterwand 12 von außen, so dass das Versteifungselement 20 einer durch Innendruck des Betriebsflüssigkeitsbehälters 10 bedingten Deformation entgegenwirkt.

Aus Figur 1 ist ferner ersichtlich, dass der Betriebsflüssigkeitsbehälter 10 in dem dargestellten Ausführungsbeispiel zwei Stabilisierungselemente 30 umfasst. Ein Stabilisierungselement 30 ist zwischen dem Versteifungselementende 23 des ersten Versteifungselementteils 21 und der ersten Behälterwand 11 angeordnet. Ein weiteres Stabilisierungselement 30 ist zwischen dem Versteifungselementende 23' des zweiten Versteifungselementteils 22 und der zweiten Behälterwand 12 angeordnet.

Die Stabilisierungselemente 30 weisen jeweils einen ersten und einen zweiten thermoplastischen Kunststoff auf, wobei zumindest ein erster thermoplastischer Kunststoff hinsichtlich der Verschweißbarkeit kompatibel mit einem thermoplastischen Kunststoff, aus dem die Behälterwände 11, 12 bestehen, ausgebildet ist. Daher ist das in Figur 1 obere dargestellte Stabilisierungselement 30 mit der ersten Behälterwand 11 und das in Figur 1 unten dargestellte Stabilisierungselement 30 ist mit der zweiten Behälterwand 12 verschweißt. In Figur 1 ist bei den Stabilisierungselementen 30 zeichnerisch angedeutet, dass diese eine aus dem ersten thermoplastischen Kunststoff (beispielsweise HDPE) bestehende Schicht, die mit der Behälterwand 11, 12 in direktem Kontakt steht, und eine aus dem zweiten thermoplastischen Kunststoff (beispielsweise Polyamid) bestehende Schicht, die mit dem Versteifungselementende 23, 23' in direktem Kontakt steht, umfassen.

Der zweite thermoplastische Kunststoff der Stabilisierungselemente kann beispielsweise aus PA oder POM gebildet sein, die eine größere Härte als beispielsweise HDPE aufweisen. Aus diesem Grund werden bei einer Zugbeanspruchung des Versteifungselements 20 die Stabilisierungselemente 30 nicht ausdünnen. Ferner wird einem Ausdünnen der ersten Behälterwand 11 und der zweiten Behälterwand 12 dadurch entgegengewirkt, dass die über die Versteifungselemente 20 auf die erste Behälterwand 11 und die zweite Behälterwand 12 ausgeübte Kräfte über eine größere Fläche, nämlich die jeweiligen Kontaktflächen zwischen den Stabilisierungseinrichtungen 30 und den Behälterwänden 11, 12 übertragen werden. Daher neigt bei dem erfindungsgemäßen Betriebsflüssigkeitsbehälter 10 sowohl die erste Behälterwand 11 als auch die zweite Behälterwand 12 weniger zum Kriechen bei einer Druckbeaufschlagung durch das Versteifungselement 20.

Auch die Versteifungselementenden 23, 23' des ersten Versteifungselementteils 21 und des zweiten Versteifungselementteils 22 weisen einen ersten und einen zweiten thermoplastischen Kunststoff auf, sodass auch die Versteifungselementenden 23, 23' entsprechend mit den jeweiligen Stabilisierungseinrichtungen 30 verschweißt sind. Daher können mittels des Versteifungselements 20 auch durch einen Unterdruck in den Betriebsflüssigkeitsbehälter 10 bedingte Zugkräfte auf die erste Behälterwand 11 und die zweite Behälterwand 12 übertragen werden. Ferner sind mittels des Versteifungselements 20 Torsionskräfte auf die erste Behälterwand 11 und die zweite Behälterwand 12 übertragbar.

Aus Figur 1 ist ferner ersichtlich, dass jedes Stabilisierungselement 30 einen umlaufenden Kragen 32 aufweist, der in Richtung auf eine Behälteraußenseite 16 abgewinkelt ist, sodass die Stabilisierungselemente 30 auf der Behälteraußenseite 16 jeweils eine Mulde 33 bilden. Durch eine entsprechende Ausbildung der Stabilisierungselemente 30 lässt sich erreichen, dass die Stabilisierungselemente 30 bündig mit den Behälterwänden 11, 12 des Betriebsflüssigkeitsbehälters 10 abschließen und somit nicht aus der Außenfläche der Behälterwände 11, 12 herausragen.

Jedes Stabilisierungselement 30 umfasst eine dessen Durchgangsöffnung 31, durch das das Versteifungselement 20 hindurchragt, umschließende Wandung 34, die in dem dargestellten Ausführungsbeispiel als zylinderförmige Wandung 34 ausgebildet ist. Die zylinderförmige Wandung 34 bildet einen zur Behälteraußenseite 16 geöffneten Aufnahmeraum 35. In den Aufnahmeraum 35 des in Figur 1 oben dargestellten Stabilisierungselements 30 ist das Versteifungselementende 23 des ersten Versteifungselementteils 21 aufgenommen. In dem Aufnahmeraum 35 des in Figur 1 unten dargestellten Stabilisierungselements 30 ist das Versteifungselementende 23' des zweiten Versteifungselementteils 22 aufgenommen.

Die Aufnahmeräume 35 der Stabilisierungselemente 30 sind jeweils mittels einer Abdeckung 36 verschlossen und zur Behälteraußenseite 16 hin abgedichtet. Die Abdeckungen 36 sind vorzugsweise mit den Stirnseiten der zylinderförmigen Wandlungen 34 der entsprechenden Stabilisierungselemente 30 verschweißt. Durch eine entsprechende Ausbildung wird das Diffundieren von beispielsweise Kohlenwasserstoffen aus der Behälterinnenseite 15 hin zur Behälteraußenseite 16 reduziert.

In den Figuren 2 bis 4 ist andeutungsweise dargestellt, dass die Versteifungselementteile 21, 22 in ihrem Durchdringungsbereich auf verschiedene Art und Weise miteinander verrastet sein können. Alternativ können diese auch über eine Dreh-RastVerbindung (Bajonettverschluss), Schraubverbindung oder eine Renkverbindung miteinander verbunden sein.

Figur 2 zeigt eine schematische Ansicht einer Rastverbindung, umfassend eine Rastaufnahme 24 und eine hierzu passende Rastzunge 26. Beispielsweise können an einem zylindrischen Abschnitt des ersten Versteifungselementteils 21 außenseitig mehrere mit Abstand zueinander angeordnete Rastaufnahmen 24 in Form von Rastkanälen vorgesehen sein, in die an dem Einsatz umfänglich befestigte Rastzungen 26 eingreifen. Die Rastzungen 26 können hierzu mit Rastfedern 27 versehen sein, die in entsprechend ausgebildete Rastausnehmungen 25 der Rastaufnahmen 24 einfedern, wie dies in Figur 2A dargestellt ist. Figur 2A zeigt einen Längsschnitt durch die Verrastung.

Figur 3 zeigt eine alternative Variante einer Rastverbindung des ersten Versteifungselementteils 21 mit dem zweiten Versteifungselementteil 22. Dabei ist vorgesehen, dass der zylindrische Abschnitt des ersten Versteifungselementteils 21 mit dem zylindrischen Abschnitt des zweiten Versteifungselementteils 22 jeweils über den gesamten Umfang verrastet ist, wobei innen umlaufend in den zylindrischen Abschnitt des ersten Versteifungselementteils 21 Rastzacken 28 vorgesehen sind und am Außenumfang des zylindrischen Abschnitts des zweiten Versteifungselementteils 22 ein umlaufend ausgebildeter Rasthaken 29 vorgesehen ist. Es ist für den Fachmann klar, dass anstelle von umlaufenden Rastzacken 28 auch diskret am Umfang der zylindrischen Abschnitte des ersten Versteifungselementteils 21 und des zweiten Versteifungselementteils 22 verteilt angeordnete Rastmittel vorgesehen sein können.

In Figur 4 ist schließlich stark vereinfacht eine Art Bajonettverschluss dargestellt, über welchen die zylindrischen Abschnitte des ersten Versteifungselementteils 21 und des zweiten Versteifungselementteils 22 formschlüssig miteinander verriegelt werden können.

### Bezugszeichenliste:

- 10: Betriebsflüssigkeitsbehälter / Kraftstoffbehälter
- 11: erste Behälterwand (des Betriebsflüssigkeitsbehälters)
- 12: zweite Behälterwand (des Betriebsflüssigkeitsbehälters)
- 13: erste Öffnung (des Betriebsflüssigkeitsbehälters)
- 14: zweite Öffnung (des Betriebsflüssigkeitsbehälters)
- 15: Behälterinnenseite
- 16: Behälteraußenseite

- 20: Versteifungselement
- 21: erstes Versteifungselementteil
- 22: zweites Versteifungselementteil
- 23, 23': Versteifungselementende / Verbindungsabschnitt des Versteifungselements
- 24: Verbindungseinrichtung / Rastaufnahme
- 25: Verbindungseinrichtung / Rastausnehmung
- 26: Verbindungseinrichtung / Rastzunge
- 27: Verbindungseinrichtung / Rastfeder
- 28: Verbindungseinrichtung / Rastzacken
- 29: Verbindungseinrichtung / Rasthaken

- 30: Stabilisierungselement
- 31: Durchgangsöffnung / Durchführöffnung (des Stabilisierungselements)
- 32: Kragen (des Stabilisierungselements)
- 33: Mulde (des Stabilisierungselements)
- 34: zylinderförmige Wandung (des Stabilisierungselements)
- 35: Aufnahmeraum (des Stabilisierungselements)
- 36: Abdeckung

## Patentansprüche

1. Betriebsflüssigkeitsbehälter (10) aus thermoplastischem Kunststoff für ein Kraftfahrzeug mit den folgenden Merkmalen:
- der Betriebsflüssigkeitsbehälter (10) weist zwei Öffnungen (13, 14) in einander gegenüberliegenden Behälterwänden (11, 12) des Betriebsflüssigkeitsbehälters (10) und ein beide Öffnungen (13, 14) durchragendes Versteifungselement (20) auf; und
- zwei Versteifungselementenden (23, 23') hintergreifen die Behälterwände (11, 12) von außen, so dass das Versteifungselement (20) einer durch Innendruck des Betriebsflüssigkeitsbehälters (10) bedingten Deformation entgegenwirkt,
wobei der Betriebsflüssigkeitsbehälter (10) durch folgende Merkmale **gekennzeichnet** ist:
- zwischen zumindest einem Versteifungselementende (23, 23') und einer Behälterwand (11, 12) ist ein Stabilisierungselement (30) angeordnet;
- das Stabilisierungselement (30) weist eine Durchgangsöffnung (31) auf, durch die das Versteifungselement (20) hindurchragt;
- das Stabilisierungselement (30) weist einen ersten und einen zweiten thermoplastischen Kunststoff auf; und
- das Stabilisierungselement (30) ist mit einer Behälterwand (11, 12) verschweißt.

2. Betriebsflüssigkeitsbehälter (10) nach Anspruch 1, **dadurch gekennzeichnet, dass** die Versteifungselementenden (23, 23') einen ersten und einen zweiten thermoplastischen Kunststoff aufweisen und mit jeweils einem Stabilisierungselement (30) verschweißt sind.

3. Betriebsflüssigkeitsbehälter (10) nach einem der vorhergehenden Ansprüche, **dadurch gekennzeichnet, dass** das Stabilisierungselement (30) einen umlaufenden Kragen (32) aufweist, der in Richtung auf eine Behälteraußenseite (16) abgewinkelt ist, so dass das Stabilisierungselement (30) auf der Behälteraußenseite eine Mulde (33) bildet.

4. Betriebsflüssigkeitsbehälter (10) nach einem der vorhergehenden Ansprüche, **dadurch gekennzeichnet, dass** das Stabilisierungselement (30) eine dessen Durchgangsöffnung (31) umschließende Wandung (34) aufweist, die einen zur Behälteraußenseite (16) geöffneten Aufnahmeraum (35) bildet, in den das Versteifungselementende (23, 23') aufgenommen ist.

5. Betriebsflüssigkeitsbehälter (10) nach Anspruch 4, **dadurch gekennzeichnet, dass** der Betriebsflüssigkeitsbehälter (10) zumindest eine Abdeckung (36) aufweist, die den Aufnahmeraum (35) des Stabilisierungselements (30) verschließt und zur Behälteraußenseite (16) hin abdichtet.

6. Betriebsflüssigkeitsbehälter (10) nach einem der vorhergehenden Ansprüchen, **dadurch gekennzeichnet, dass**
- das Versteifungselement (20) ist zweistückig mit einem ersten Versteifungselementteil (21) und einem zweiten Versteifungselementteil (22) ausgebildet;
- das erste Versteigungselementteil (21) ragt durch eine erste Öffnung (13) einer ersten Behälterwand (11) und das zweite Versteifungselementteil (22) ragt durch eine zweite Öffnung (14) in einer zweiten Behälterwand (12);
- das Versteifungselementende (23) des ersten Versteifungselementteils (21) hintergreift die erste Behälterwand (11) und das Versteifungselementende (23') des zweiten Versteifungselementteils (22) hintergreift die zweite Behälterwand (12) jeweils von außen; und
- das erste Versteifungselementteil (21) und das zweite Versteifungselementteil (22) weisen jeweils ihren Versteifungselementenden (23, 23') gegenüberliegend eine Verbindungseinrichtung (24 - 29) auf, mittels denen die beiden Versteifungselementteile (21, 22) miteinander verbunden sind.

7. Betriebsflüssigkeitsbehälter (10) nach Anspruch 6, **dadurch gekennzeichnet, dass** die jeweiligen Versteifungselementteile (21, 22) an den den Versteifungselementenden (23, 23') gegenüberliegenden Enden eine Schneideinrichtung zum Durchtrennen der Behälterwandung (11, 12) aufweisen.

8. Betriebsflüssigkeitsbehälter (10) nach einem der vorhergehenden Ansprüche, **dadurch gekennzeichnet, dass** der Betriebsflüssigkeitsbehälter (10) durch Blasformen eines schlauchförmigen Vorformlings erzeugt wird.

9. Verfahren zum Herstellen eines Betriebsflüssigkeitsbehälters (10) aus thermoplastischem Kunststoff mit zumindest einem zwischen einander gegenüberliegenden Behälterwänden (11, 12) angeordnetem Versteifungselement (20), das einer durch Innendruck des Betriebsflüssigkeitsbehälters (10) bedingten Deformation entgegenwirkt, folgende Verfahrensschritte aufweisend:
- Bereitstellen von zumindest einem eine Durchgangsöffnung (31) aufweisenden Stabilisierungselement (30);
- Einbringen eines schlauchförmigen Vorformlings aus thermoplastischem Kunststoff in ein Blasformwerkzeug mit einem Formnest, welches die Kontur des Betriebsflüssigkeitsbehälters (10) definiert;
- Ausformen des Vorformlings innerhalb des Formnestes, wobei der Vorformling das Stabilisierungselement (30) formnestseitig umschließt und mit dem Stabilisierungselement (30) verschweißt wird;
- Herstellen von zwei Öffnungen (13, 14) in einander gegenüberliegenden Behälterwänden (11, 12) des Betriebsflüssigkeitsbehälters (10);
- Einführen eines ersten Versteifungselementteils (21) durch eine erste Öffnung (13) und eines zweiten Versteifungselementteils (22) durch eine zweite Öffnung (14), so dass zumindest ein Versteifungselementende (23, 23') der Versteifungselementteile (21, 22) in direktem Kontakt mit dem zumindest einen Stabilisierungselement (30) steht, wobei die Versteifungselementenden (23, 23') die Behälterwände (11, 12) jeweils hintergreifen; und
- Verbinden des ersten Versteifungselementteils (21) mit dem zweiten Versteifungselementteil (22) mittels an den Versteifungselementteilen (21, 42) bereitgestellten Verbindungseinrichtungen (24 - 29).

10. Verfahren nach Anspruch 9, **dadurch gekennzeichnet, dass** die Öffnungen (13, 14) in den einander gegenüberliegenden Behälterwänden (11, 12) mittels jeweils einer den Versteifungselementenden (23, 23') gegenüberliegenden Schneideeinrichtung der Versteifungselementteile (21, 22) in die Behälterwände (11, 12) eingebracht werden, indem das erste Versteifungselementteil (21) durch eine erste Behälterwand (11) und das zweite Versteifungselementteil (22) durch eine zweite Behälterwand (12) hindurchgeschoben wird.

11. Verfahren nach einem der Ansprüche 9 oder 10, **dadurch gekennzeichnet, dass** die Versteifungselementenden (23, 23') einen ersten und zweiten thermoplastischen Kunststoff aufweisen und mit jeweils einem Stabilisierungselement (30) verschweißt werden.

## Claims

1. An operating fluid container (10) made of thermoplastic for a motor vehicle, comprising the following features:
- the operating fluid container (10) has two openings (13, 14) in mutually opposite container walls (11, 12) of the operating fluid container (10), and a stiffening element (20) projecting through the two openings (13, 14); and
- two stiffening elements (23, 23') engage behind the container walls (11, 12) from the outside, and therefore the stiffening element (20) counteracts deformation caused by the internal pressure of the operating fluid container (10),
wherein the operating fluid container (10) is **characterized by** the following features:
- a stabilizing element (30) is arranged between at least one stiffening element end (23, 23') and a container wall (11, 12);
- the stabilizing element (30) has a passage opening (31) through which the stiffening element (20) projects;
- the stabilizing element (30) comprises a first and a second thermoplastic; and
- the stabilizing element (30) is welded to a container wall (11, 12).

2. The operating fluid container (10) as claimed in claim 1, **characterized in that** the stiffening element ends (23, 23') comprise a first and a second thermoplastic and are welded to one stabilizing element (30) each.

3. The operating fluid container (10) as claimed in either of the preceding claims, **characterized in that** the stabilizing element (30) has an encircling collar (32) which is angled in the direction of a container outer side (16), and therefore the stabilizing element (30) forms a trough (33) on the container outer side.

4. The operating fluid container (10) as claimed in one of the preceding claims, **characterized in that** the stabilizing element (30) has a wall (34) which surrounds the passage opening (31) therein and forms a receiving space (35) which is open to the container outer side (16) and into which the stiffening element end (23, 23') is received.

5. The operating fluid container (10) as claimed in claim 4, **characterized in that** the operating fluid container (10) has at least one covering (36) which closes the receiving space (35) of the stabilizing element (30) and seals same toward the container outer side (16).

6. The operating fluid container (10) as claimed in one of the preceding claims, **characterized in that**
- the stiffening element (20) is formed in two pieces with a first stiffening element part (21) and a second stiffening element part (22);
- the first stiffening element part (21) projects through a first opening (13) in a first container wall (11) and the second stiffening element part (22) projects through a second opening (14) in a second container wall (12);
- the stiffening element end (23) of the first stiffening element part (21) engages behind the first container wall (11) and the stiffening element end (23') of the second stiffening element part (22) engages behind the second container wall (12), in each case from the outside; and
- the first stiffening element part (21) and the second stiffening element part (22) each has, opposite their stiffening element ends (23, 23'), a connecting device (24 - 29), which connecting devices are used to connect the two stiffening element parts (21, 22) to each other.

7. The operating fluid container (10) as claimed in claim 6, **characterized in that**, at the ends opposite the stiffening element ends (23, 23'), the respective stiffening element parts (21, 22) have a cutting device for severing the container wall (11, 12).

8. The operating fluid container (10) as claimed in one of the preceding claims, **characterized in that** the operating fluid container (10) is produced by blow molding a tubular preform.

9. A method for producing an operating fluid container (10) made of thermoplastic with at least one stiffening element (20) which is arranged between mutually opposite container walls (11, 12) and counteracts deformation caused by the internal pressure of the operating fluid container (10), having the following method steps:
- providing at least one stabilizing element (30) having a passage opening (31);
- introducing a tubular preform made of thermoplastic into a blow mold having a mold cavity which defines the contour of the operating fluid container (10);
- molding the preform inside the mold cavity, wherein the preform surrounds the stabilizing element (30) on the mold cavity side and is welded to the stabilizing element (30) ;
- producing two openings (13, 14) in mutually opposite container walls (11, 12) of the operating fluid container (10) ;
- inserting a first stiffening element part (21) through a first opening (13) and a second stiffening element part (22) through a second opening (14) such that at least one stiffening element end (23, 23') of the stiffening element parts (21, 22) is/are in direct contact with the at least one stabilizing element (30) wherein the stiffening element ends (23, 23') each engage behind the container walls (11, 12); and
- connecting the first stiffening element part (21) to the second stiffening element part (22) by means of connecting devices (24 - 29) provided on the stiffening element parts (21, 42).

10. The method as claimed in claim 9, **characterized in that** the openings (13, 14) in the mutually opposite container walls (11, 12) are introduced into the container walls (11, 12) by means of a respective cutting device of the stiffening element parts (21, 22) opposite the stiffening element ends (23, 23') by the first stiffening element part (21) being pushed through a first container wall (11) and the second stiffening element part (22) being pushed through a second container wall (12).

11. The method as claimed in either of claims 9 and 10, **characterized in that** the stiffening element ends (23, 23') comprise a first and second thermoplastic and are welded to one stabilizing element (30) each.

## Revendications

1. Récipient de liquide de fonctionnement (10) en matière plastique thermoplastique pour un véhicule automobile, comprenant les caractéristiques suivantes :
- le récipient de liquide de fonctionnement (10) présente deux ouvertures (13, 14) dans des parois de récipient mutuellement opposées (11, 12) du récipient de liquide de fonctionnement (10) et un élément de renforcement (20) traversant les deux ouvertures (13, 14) ; et
- deux extrémités d'élément de renforcement (23, 23') s'engagent par l'arrière avec les parois de récipient (11, 12) depuis l'extérieur de telle sorte que l'élément de renforcement (20) agisse de manière à s'opposer à une déformation provoquée par la pression à l'intérieur du récipient de liquide de fonctionnement (10),
le récipient de liquide de fonctionnement (10) étant **caractérisé par** les caractéristiques suivantes :
- un élément de stabilisation (30) est disposé entre au moins une extrémité d'élément de renforcement (23, 23') et une paroi de récipient (11, 12) ;
- l'élément de stabilisation (30) présente une ouverture de passage (31) à travers laquelle pénètre l'élément de renforcement (20) ;
- l'élément de stabilisation (30) présente une première et une deuxième matière plastique thermoplastique ; et
- l'élément de stabilisation (30) est soudé à une paroi de récipient (11, 12).

2. Récipient de liquide de fonctionnement (10) selon la revendication 1, **caractérisé en ce que** les extrémités d'élément de renforcement (23, 23') présentent une première et une deuxième matière plastique thermoplastique et sont soudées à chaque fois avec un élément de stabilisation (30).

3. Récipient de liquide de fonctionnement (10) selon l'une quelconque des revendications précédentes, **caractérisé en ce que** l'élément de stabilisation (30) présente un collet périphérique (32) qui est coudé dans la direction d'un côté extérieur du récipient (16) de telle sorte que l'élément de stabilisation (30) forme un creux (33) sur le côté extérieur du récipient.

4. Récipient de liquide de fonctionnement (10) selon l'une quelconque des revendications précédentes, **caractérisé en ce que** l'élément de stabilisation (30) présente une paroi (34) entourant son ouverture de passage (31), laquelle forme un espace de réception (35) ouvert vers le côté extérieur du récipient (16), dans lequel est reçue l'extrémité d'élément de renforcement (23, 23').

5. Récipient de liquide de fonctionnement (10) selon la revendication 4, **caractérisé en ce que** le récipient de liquide de fonctionnement (10) présente au moins un recouvrement (36) qui ferme l'espace de réception (35) de l'élément de stabilisation (30) et l'étanchéifie par rapport au côté extérieur du récipient (16).

6. Récipient de liquide de fonctionnement (10) selon l'une quelconque des revendications précédentes, **caractérisé en ce que**
- l'élément de renforcement (20) est réalisé en deux parties avec une première partie d'élément de renforcement (21) et une deuxième partie d'élément de renforcement (22) ;
- la première partie d'élément de renforcement (21) pénètre à travers une première ouverture (13) d'une première paroi de récipient (11) et la deuxième partie d'élément de renforcement (22) pénètre à travers une deuxième ouverture (14) dans une deuxième paroi de récipient (12) ;
- l'extrémité d'élément de renforcement (23) de la première partie d'élément de renforcement (21) vient en prise par l'arrière avec la première paroi de récipient (11) et l'extrémité d'élément de renforcement (23') de la deuxième partie d'élément de renforcement (22) vient en prise par l'arrière avec la deuxième paroi de récipient (12), à chaque fois depuis l'extérieur ; et
- la première partie d'élément de renforcement (21) et la deuxième partie d'élément de renforcement (22) présentent un dispositif de connexion (24-29) à chaque fois opposé à leurs extrémités d'élément de renforcement (23, 23'), au moyen duquel les deux parties d'élément de renforcement (21, 22) sont connectées l'une à l'autre.

7. Récipient de liquide de fonctionnement (10) selon la revendication 6, **caractérisé en ce que** les parties d'élément de renforcement respectives (21, 22) présentent, au niveau des extrémités opposées aux extrémités d'élément de renforcement (23, 23'), un dispositif de coupe pour sectionner la paroi de récipient (11, 12).

8. Récipient de liquide de fonctionnement (10) selon l'une quelconque des revendications précédentes, **caractérisé en ce que** le récipient de liquide de fonctionnement (10) est produit par moulage-soufflage d'une préforme tubulaire.

9. Procédé de fabrication d'un récipient de liquide de fonctionnement (10) en matière plastique thermoplastique comprenant au moins un élément de renforcement (20) disposé entre des parois de récipient mutuellement opposées (11, 12), qui agit de manière à s'opposer à une déformation provoquée par la pression à l'intérieur du récipient de liquide de fonctionnement (10), présentant les étapes de procédé suivantes :
- fourniture d'au moins un élément de stabilisation (30) présentant une ouverture de passage (31) ;
- introduction d'une préforme tubulaire en matière plastique thermoplastique dans un outil de moulage-soufflage avec une cavité de moulage, qui définit le contour du récipient de liquide de fonctionnement (10) ;
- déformation de la préforme à l'intérieur de la cavité de moulage, la préforme entourant l'élément de stabilisation (30) du côté de la cavité de moulage et étant soudée avec l'élément de stabilisation (30) ;
- fabrication de deux ouvertures (13, 14) dans des parois de récipient mutuellement opposées (11, 12) du récipient de liquide de fonctionnement (10) ;
- introduction d'une première partie d'élément de renforcement (21) à travers une première ouverture (13) et d'une deuxième partie d'élément de renforcement (22) à travers une deuxième ouverture (14), de telle sorte qu'au moins une extrémité d'élément de renforcement (23, 23') des parties d'élément de renforcement (21, 22) soit en contact direct avec l'au moins un élément de stabilisation (30),
les extrémités d'élément de renforcement (23, 23') venant en prise à chaque fois par l'arrière avec les parois de récipient (11, 12) ; et
- connexion de la première partie d'élément de renforcement (21) à la deuxième partie d'élément de renforcement (22) au moyen de dispositifs de connexion (24-29) fournis au niveau des parties d'élément de renforcement (21, 42).

10. Procédé selon la revendication 9, **caractérisé en ce que** les ouvertures (13, 14) dans les parois de récipient mutuellement opposées (11, 12) sont réalisées dans les parois de récipient (11, 12) à chaque fois au moyen d'un dispositif de coupe des parties d'élément de renforcement (21, 22) opposé aux extrémités d'élément de renforcement (23, 23') en enfonçant le premier élément de renforcement (21) à travers une première paroi de récipient (11) et le deuxième élément de renforcement (22) à travers une deuxième paroi de récipient (12).

11. Procédé selon l'une quelconque des revendications 9 et 10, **caractérisé en ce que** les extrémités d'élément de renforcement (23, 23') présentent une première et une deuxième matière plastique thermoplastique et sont soudées à chaque fois à un élément de stabilisation (30).
